# EUROPEAN PATENT SPECIFICATION

(11) **EP 3 966 439 B1**
(45) Date of publication and mention of the grant of the patent: **17.09.2025**
(21) Application number: 20732330.4
(22) Date of filing: 06.05.2020
(51) Int. Cl.: F01N 3/05, F01N 13/08, F01N 13/14

(54) **SERVICE VEHICLE WITH ENGINE AND EXHAUST COOLING**
DIENSTFAHRZEUG MIT MOTOR UND ABGASKÜHLUNG
VÉHICULE DE SERVICE AVEC MOTEUR ET REFROIDISSEMENT D'ÉCHAPPEMENT

(30) Priority: 08.05.2019 NL 1043254
(43) Date of publication of application: 16.03.2022
(73) Proprietor: Rior, Industrie- en Handelsonderneming B.V., 5015 TC Tilburg (NL)
(72) Inventor: SOETHOUT, Marc Petrus Bernardus, 5015 TC Tilburg (NL)
(74) Representative: Patentwerk B.V.
(86) International application number: PCT/NL2020/000009
(87) International publication number: WO 2020/226486

(56) References cited:
- EP-A1- 2 735 712
- EP-A2- 2 574 751
- WO-A2-02/070289
- US-A- 5 689 953
- US-B1- 6 358 109

## Description

### FIELD OF THE INVENTION

The present invention relates in general to a service vehicle, typically a van or truck, for performing cleaning operations by means of pressurized water. By way of example, the water is sprayed through a nozzle to clean the exterior walls of buildings, or to clean the interior walls of pipes.

### BACKGROUND OF THE INVENTION

A vehicle of the type indicated comprises cleaning apparatus, which includes a water supply, hoses and nozzles for transporting and applying the pressurized water, and a pump for pressurizing the water and feeding the pressurized water through the hoses.

Said pump is a motor-driven pump which will be in operation, continuously or intermittently, for as long as the cleaning operation takes. The motor typically involves a combustion engine, which is operative continuously as long as the pump is operative.

The service vehicle typically has a closed cabin in which the cleaning apparatus, or in any case the pump unit with the combustion engine, is arranged. Obviously, the combustion engine produces exhaust gases, and is therefore provided with an exhaust pipe. In order to reduce exhaust emission, the exhaust pipe is provided with a catalytic converter, which however, in order to operate properly, must have a high operative temperature. As a consequence, the exhaust gases leaving the exhaust pipe have a very high temperature.

In accordance with the nature of the service vehicle, the vehicle is stationary when in service operation. In general, it is not known in advance where exactly the vehicle will be positioned. It must be ready to be positioned anywhere without the exhaust gases forming a direct problem for its surroundings; for this reason, the exhaust pipe exit opening is normally not directed horizontally from the side end or rear end of the vehicle, and is directed through the roof, but projects vertically down through the floor of the cabin. Nevertheless, the hot exhaust gases are in risk of damaging the surface covering on which the vehicle is standing. If that surface covering involves tarmac, the tarmac may melt. If that surface covering involves grass, the grass may catch fire.

Furthermore, the exhaust pipe within the confinement of the vehicle cabin will cause the temperature in the cabin to rise to levels which are unpleasant or even unhealthy to the workers that operate the apparatus.

It is a general objective of the present invention to eliminate or at least reduce this problem.

### SUMMARY OF THE INVENTION

According to the invention, a casing is arranged around the exhaust pipe including the catalytic converter. This casing entirely surrounds the exhaust pipe including its exit opening, while itself having an opening adjacent said exhaust pipe exit opening. A protective air flow is generated in the space between the casing and the exhaust pipe, in any case cooling the casing, and eventually mixing with the exhaust gases to cool these gases. While the exhaust pipe and the catalytic converter may remain hot, they will be externally cooled by the air flow, but importantly the casing will remain relatively cool, so that heat radiation into the cabin will be reduced.

US6358109 describes a boat, with a propulsion engine arranged in an engine compartment. Exhaust gases of the boat's propulsion engine are discharged through a side wall of the boat, above the waterline, after having been mixed with cooling air inside the boat.

EP2735712 describes a shovel, with a propulsion engine arranged in an engine room. Exhaust gases of the shovel's propulsion engine are discharged through a hole in the floor of the engine room, after having been mixed with cooling air inside the engine room.

EP2574751 discloses a van with a cabin, a combustion engine in the cabin and an exhaust pipe through the floor of the cabin.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1 is a diagram schematically showing a service vehicle;
figure 2 is a schematic drawing, schematically showing the engine and the exhaust system.

### DETAILED DESCRIPTION OF THE INVENTION

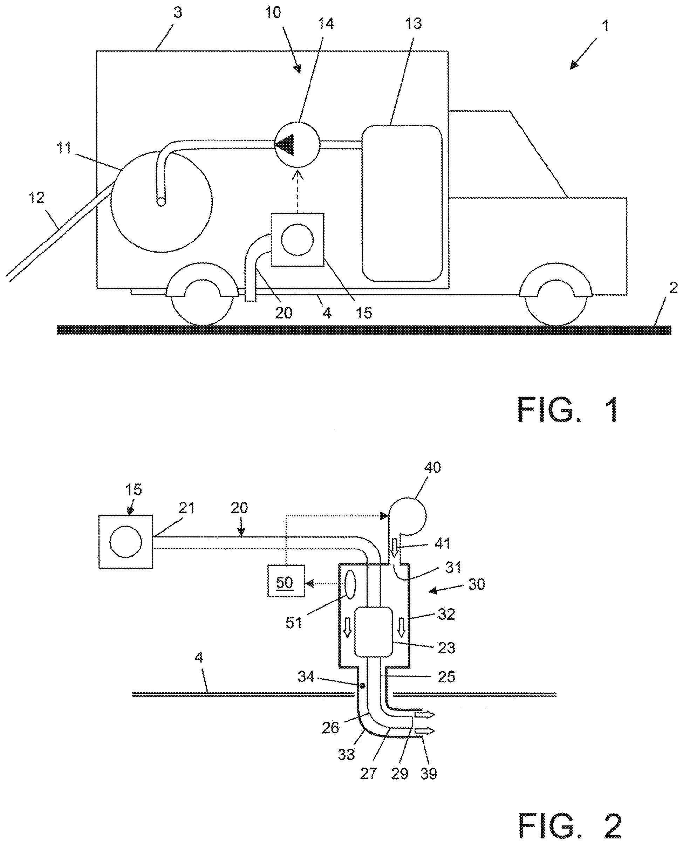

Figure 1 is a diagram schematically showing a service vehicle 1 standing on a bottom 2. The vehicle 1 has a cabin 3 in which a cleaning apparatus 10 is arranged. The cleaning apparatus 10 may be of the type having a reel 11 carrying a wound hose 12 for providing pressurized liquid, typically water. A water reservoir is indicated at 13. Reference numeral 14 indicates a pump that pressurizes water from the reservoir 13 and supplies it to the hose 12. The pump is driven by a combustion engine 15, that has an exhaust pipe 20 projecting through a floor 4 of the cabin 3.

It is noted that the precise nature and design of the pump is not relevant for understanding the present invention, and will therefore not be discussed here in further detail. A similar remark applies to the combustion engine 15.

Figure 2 is a schematic drawing, schematically showing the engine 15, and showing the exhaust system in some more detail at a larger scale.

In practice, the exact length and shape of the exhaust pipe 20 will depend on the position where the engine 15 could be mounted and where a passage hole for the pipe 20 could be arranged in the cabin 3, preferably, as in the illustrated case, in the floor 4 of the cabin 3. Particularly, the exhaust pipe 20 may have some bends between straight stretches of pipe. In any case, the exhaust pipe 20 will have an entrance 21 connecting to the engine 15, a passage pipe portion 25 passing through the cabin floor 4, and a free exit opening 29. The passage pipe portion 25 may be vertical, but may also be sloping down; in any case, for extending through a horizontal cabin floor 4, the passage pipe portion 25 has some vertical extent. It is desirable that the exhaust gases are not blown against the bottom 2 directly, but instead are blown out more or less horizontally, for which purpose the passage pipe portion 25 may connect to a more or less horizontal termination pipe portion 27 via a bend portion 26.

The pipe 20 is, at some position, provided with a catalytic converter 23. It is noted that such converters are known, and that the precise nature and design of the catalytic converter is not relevant for understanding the present invention; this will therefore not be discussed here in further detail.

The precise position of the catalytic converter 23 is not particularly relevant. In the schematic illustration, the catalytic converter 23 is shown arranged in the passage pipe portion 25, but this is not essential and should not be interpreted as being limiting for the present invention.

According to the invention, a casing 30 is arranged around a large portion of the exhaust pipe 20, which portion in any case includes the final portion of the exhaust pipe 20. The material of the casing is not essential. Suitably, the casing 30 may be made from sheet metal, most conveniently stainless steel metal sheet. The invention is useful in cases where no catalytic converter is present, but in the preferred embodiment, which does include a catalytic converter 23 indeed, the casing 30 may include a wider converter case portion 32 that encloses the catalytic converter 23.

The casing 30 is preferably substantially closed, and has an entrance opening 31 located within the cabin 3, connecting to an outlet of a source 40 for air flow, for instance a blower 40, preferably arranged within the cabin 3. Beyond the catalytic converter 23, the casing 30 may become narrower to the end, typically terminating in a (bent) casing pipe portion 33 that conforms to the exhaust pipe portions 25, 26, 27, and that has a free opening 39 outside the cabin 3, functioning as exit opening of the casing 30. According to claim 1, the casing pipe portion 33 extends beyond the free exit opening 29 of the exhaust pipe 20, or, in other words, that the free exit opening 29 of the exhaust pipe 20 lies recessed with respect to the free exit opening 39 of the casing pipe portion 33.

In operation, the blower 40 will blow ambient air 41 from within the cabin 3 into the casing 30. While it may be hot in the cabin 3, air temperature will nevertheless be much lower than the exhaust gas temperature. The air flow will have a cooling effect on the components within the casing 30, i.e. the exhaust pipe 20 and the catalytic converter 23, which are subjected to the hot exhaust gases inside. The air flow will also have a cooling effect on the casing 30, to the extent that it may be safe for the workers to touch.

The air from the blower 40 will flow in the annular space 34 between the casing pipe portion 33 and the exhaust pipe portions 25, 26, 27 to reach the free exit opening 39 of the casing pipe portion 33. At the exhaust exit opening 29, the hot exhaust gases will in any case be enveloped by, and will subsequently mix with, the cooler air flow. The exit mouth piece of the casing pipe portion 33 may, if desired, be provided with features to increase turbulence and hence to enhance mixing. In any case, an important effect of the present invention is that the temperature of the exhaust gases is quickly reduced to an acceptable level.

In an embodiment, for sake of efficiency, the engine may be operated at constant power and/or at constant rpm, so that the exhaust gas flow rate and exhaust gas temperature may, after a run-in period, be considered to be substantially constant. In such case, the blower 40 may be set to operate constantly at a suitable air flow rate, which can easily be determined empirically by a person skilled in the art on a case by case basis. The blower setting may be variable, and may for instance be set by an operator by turning a control knob.

It is also possible that operation of the blower 40 is controlled by a controller 50, on the basis of a measuring signal from a temperature sensor 51 arranged inside the casing 30.

In either case, blower power may be controlled on the basis of constant power, in which case the power level is varied, or on the basis of alternating on/off operation, in which case the duty cycle may be varied.

In a simple embodiment, the blower is only switched on to operate constantly at maximum blow rate and hence maximum cooling capacity.

It is noted that the invention has been described for the case of a vehicle with a closed cabin 3, but the invention is also applicable in the case of an open cabin.

It should be clear to a person skilled in the art that the present invention is not limited to the exemplary embodiments discussed above, but that several variations and modifications are possible within the protective scope of the invention as defined in the appending claims.

## Claims

1. Service vehicle (1) such as a van or a truck, comprising a cabin, a combustion engine in the cabin and an exhaust pipe through the floor of the cabin;
**CHARACTERIZED IN THAT** the service vehicle comprises a cleaning apparatus (10) using pressurized liquid, the apparatus comprising a pump (14) driven by the combustion engine (15) for pressurizing said liquid, wherein said combustion engine (15) is arranged within said cabin (3);
wherein said combustion engine (15) is provided with an exhaust pipe (20) guiding exhaust gases of said combustion engine (15) to the outside of the cabin (3);
wherein said exhaust pipe (20) has a passage pipe portion (25) and a termination pipe portion (27) with a free end opening (29), with the passage pipe portion (25) extending vertically or at an oblique angle through the floor (4) of the cabin (3) and outside the cabin (3) connecting to the termination pipe portion (27);
wherein said exhaust pipe (20) is provided with a casing (30) surrounding at least a portion of said exhaust pipe (20), with a space (34) between said casing (30) and said exhaust pipe (20);
wherein said casing (30) comprises an end pipe portion (33) that conforms to said exhaust pipe portions and has a free end opening (39) extending beyond the free end opening (29) of said exhaust pipe (20);
wherein said service vehicle further comprises a source (40) of air flow (41) that is connected to an entrance (31) of said casing (30);
wherein, in operation, said air flow (41) flows in said space (34) between said casing (30) and said exhaust pipe (20) to effectively cool said casing (30) and said exhaust pipe (20), and to mix with said exhaust gases to cool these gases.

2. Service vehicle (1) according to claim 1, wherein said exhaust pipe (20) has a more or less horizontal termination pipe portion (27) and a bend portion (26) between the passage pipe portion (25) and the termination pipe portion (27).

3. Service vehicle (1) according to claim 1, wherein said exhaust pipe (20) is provided with a catalytic converter (23), and wherein said casing (30) encloses said catalytic converter (23).

4. Service vehicle (1) according to any of the previous claims, wherein said source (40) of air flow (41) comprises a blower (40).

5. Service vehicle (1) according to any of the previous claims, wherein said source (40) of air flow (41) draws air from within the cabin (3).

## Patentansprüche

1. Servicefahrzeug (1), wie beispielsweise ein Lieferwagen oder ein Lastwagen, umfassend eine Kabine, einen Verbrennungsmotor in der Kabine und ein Abgasrohr durch den Boden der Kabine; **DADURCH GEKENNZEICHNET, DASS** das Servicefahrzeug eine Reinigungsvorrichtung (10) umfasst, die unter Druck stehende Flüssigkeit verwendet, die Vorrichtung umfassend eine Pumpe (14), die zur Druckbeaufschlagung der Flüssigkeit von dem Verbrennungsmotor (15) angetrieben wird, wobei der Verbrennungsmotor (15) innerhalb der Kabine (3) angeordnet ist; wobei der Verbrennungsmotor (15) mit einem Abgasrohr (20) versehen ist, das die Abgase des Verbrennungsmotors (15) nach außerhalb der Kabine (3) leitet; wobei das Abgasrohr (20) einen Durchgangsrohrabschnitt (25) und einen Endrohrabschnitt (27) mit einer freien Endöffnung (29) aufweist, wobei der Durchgangsrohrabschnitt (25) senkrecht oder schräg durch den Boden (4) der Kabine (3) verläuft und außerhalb der Kabine (3) mit dem Endrohrabschnitt (27) verbunden ist; wobei das Abgasrohr (20) mit einem Gehäuse (30) versehen ist, das mindestens einen Abschnitt des Abgasrohrs (20) mit einem Raum (34) zwischen dem Gehäuse (30) und dem Abgasrohr (20) umgibt; wobei das Gehäuse (30) einen Endrohrabschnitt (33) umfasst, der mit den Abgasrohrabschnitten übereinstimmt und eine freie Endöffnung (39) aufweist, die sich über die freie Endöffnung (29) des Abgasrohrs (20) hinaus erstreckt; wobei das Servicefahrzeug ferner eine Quelle (40) für Luftstrom (41) umfasst, die mit einem Eingang (31) des Gehäuses (30) verbunden ist; wobei der Luftstrom (41) im Betrieb in dem Raum (34) zwischen dem Gehäuse (30) und dem Abgasrohr (20) strömt, um das Gehäuse (30) und das Abgasrohr (20) wirksam zu kühlen und sich mit den Abgasen zu vermischen, um diese Gase zu kühlen.

2. Servicefahrzeug (1) nach Anspruch 1, wobei das Abgasrohr (20) einen mehr oder weniger horizontalen Endrohrabschnitt (27) und einen Biegeabschnitt (26) zwischen dem Durchgangsrohrabschnitt (25) und dem Endrohrabschnitt (27) aufweist.

3. Servicefahrzeug (1) nach Anspruch 1, wobei das Abgasrohr (20) mit einem Katalysator (23) versehen ist, und wobei das Gehäuse (30) den Katalysator (23) umschließt.

4. Servicefahrzeug (1) nach einem der vorherigen Ansprüche, wobei die Quelle (40) für Luftstrom (41) ein Gebläse (40) umfasst.

5. Servicefahrzeug (1) nach einem der vorherigen Ansprüche, wobei die Quelle (40) für Luftstrom (41) Luft aus dem Inneren der Kabine (3) ansaugt.

## Revendications

1. Véhicule de service (1) tel qu'une camionnette ou un camion, comprenant une cabine, un moteur à combustion dans la cabine et un tuyau d'échappement à travers le plancher de la cabine ; **caractérisé en ce que** le véhicule de service comprend un appareil de nettoyage (10) utilisant un liquide sous pression, l'appareil comprenant une pompe (14) entraînée par le moteur à combustion (15) pour pressuriser ledit liquide, dans lequel ledit moteur à combustion (15) est agencé à l'intérieur de ladite cabine (3) ; dans lequel ledit moteur à combustion (15) est muni d'un tuyau d'échappement (20) guidant les gaz d'échappement dudit moteur à combustion (15) à l'extérieur de la cabine (3) ; dans lequel ledit tuyau d'échappement (20) présente une partie de tuyau de passage (25) et une partie de tuyau terminale (27) avec une ouverture d'extrémité libre (29), la partie de tuyau de passage (25) s'étendant verticalement ou selon un angle oblique à travers le plancher (4) de la cabine (3) et se raccordant à l'extérieur de la cabine (3) à la partie de tuyau terminale (27) ; dans lequel ledit tuyau d'échappement (20) est muni d'une gaine (30) entourant au moins une partie dudit tuyau d'échappement (20), un espace (34) étant présent entre ladite gaine (30) et ledit tuyau d'échappement (20) ; dans lequel ladite gaine (30) comprend une partie de tuyau terminale (33) qui s'adapte auxdites parties de tuyau d'échappement et présente une ouverture d'extrémité libre (39) s'étendant au-delà de l'ouverture d'extrémité libre (29) dudit tuyau d'échappement (20) ; dans lequel ledit véhicule de service comprend en outre une source (40) de flux d'air (41) qui est raccordée à une entrée (31) de ladite gaine (30) ; dans lequel, en fonctionnement, ledit flux d'air (41) circule dans ledit espace (34) entre ladite gaine (30) et ledit tuyau d'échappement (20) pour refroidir efficacement ladite gaine (30) et ledit tuyau d'échappement (20), et pour se mélanger avec lesdits gaz d'échappement pour refroidir ces gaz.

2. Véhicule de service (1) selon la revendication 1, dans lequel ledit tuyau d'échappement (20) présente une partie de tuyau terminale (27) plus ou moins horizontale et une partie coudée (26) entre la partie de tuyau de passage (25) et la partie de tuyau terminale (27).

3. Véhicule de service (1) selon la revendication 1, dans lequel ledit tuyau d'échappement (20) est muni d'un convertisseur catalytique (23), et dans lequel ladite gaine (30) entoure ledit convertisseur catalytique (23).

4. Véhicule de service (1) selon l'une quelconque des revendications précédentes, dans lequel ladite source (40) de flux d'air (41) comprend une soufflante (40).

5. Véhicule de service (1) selon l'une quelconque des revendications précédentes, dans lequel ladite source (40) de flux d'air (41) aspire l'air de l'intérieur de la cabine (3).
